# EUROPEAN PATENT APPLICATION

(11) **EP 1 792 796 A1**
(43) Date of publication of application: **06.06.2007**
(21) Application number: 04788243.6
(22) Date of filing: 28.09.2004
(51) Int. Cl.: B60T 7/04

(54) **BRAKE OPERATING DEVICE OF TRAVELING VEHICLE**

(30) Priority: 13.09.2004 JP 2004265531
(71) Applicant: Yanmar Co., Ltd., Osaka-shi, Osaka 530-0013 (JP)
(72) Inventor: SAKAMOTO, Kunihiko, Osaka-shi Osaka 530-0013 (JP)
(74) Representative: Jostarndt, Hans-Dieter
(86) International application number: PCT/JP2004/014176
(87) International publication number: WO 2006/030536

(57) **Abstract**

An object is to provide a novel brake operation system having left and right independent brake pedals, preventing the pulling of one of the brakes. The brake operation system comprises: left and right independent brake pedals 11 and 12; and a master brake pedal 13 for simultaneously operating brake pedals 11 and 12. Master brake pedal 13 is disposed at the middle between left and right brake pedals 11 and 12 so that left and right brake pedals 11 and 12 are depressed for applying respective brakes by treading master brake pedal 13.

## Description

### Technical Field

The invention relates to a brake operation system for a vehicle, in which a pair of brake pedals are disposed adjacent to each other and are operatively connected to respective left and right side brakes for braking respective left and right running wheels.

### Background Art

Conventionally, there is a well-known agricultural working vehicle for riding, having a pair of left and right brake pedals. One brake pedal is provided with a connection member, and the other brake pedal is formed with an engageable portion which is engageable with the connection member. Due to engagement of the connection member to the engageable potion, during fast on-road traveling of the vehicle, both the brake pedals are simultaneously depressed by treading one of the brake pedals, so as to prevent the pulling of one of the brakes causing unexpected turning of the vehicle, thereby safely and swiftly stopping the vehicle. A reference 1 discloses a typical vehicle having the above feature.
As well known, the typical vehicle is provided with a parking lock system.
While both the brake pedals are synchronously depressed due to the engagement, one of the brake pedals is locked by the parking lock system so as to lock the left and right running wheels.
The manual operation of the connection member to engage with the engageable portion may be forgotten. A reference 2 discloses a technology for preventing such a mistake.
As disclosed in a reference 3, the vehicle can be additionally provided with a master brake pedal for simultaneously depressing the left and right brake pedals. In the vehicle disclosed in the reference 3, the pair of left and right brake pedals and the master brake pedal are arranged so that the pair of left and right brake pedals are trod by a left foot, and the master brake pedal is trod by a right foot. Two pivot shafts are juxtaposed. The pair of left and right brake pedals have respective pivotal bases pivoted on one pivot shaft, and the master brake pedal has a pivotal base pivoted on the other pivot shaft.
Reference 1: JP S60-15282 A
Reference 2: JP 2548441 B2
Reference 3: JP H09-207732 A

In the system disclosed in the reference 2, the operation to connect the connection member to the engageable portion is associated with operation of a lever for connecting or disconnecting a working machine to and from the vehicle. Therefore, the system requires a complicated wiring for connecting the connection member to the lever. Further, the system is lack of reliability because the left and right brakes are not simultaneously operated when the wire is slackened or cut or has another problem.
In the system disclosed in the reference 3, an operator has to tread the brake pedals with his/her different left and right feet. Thus, if any brake suddenly has to be applied, the operator is likely to missoperate. Further, the independent pivot shafts are required so as to increase the number of parts, to complicate the system, and to require a large space. The system is further complicated because it requires a linkage for interlocking the pivotal bases of the left and right brake pedals to the pivotal base of the master brake pedal. This linkage reduces the responsibility, i.e., reliability of the brakes (unstably applying the brakes). Further, with respect to the parking lock system, if the connection member is forgotten to be connected to the engageable portion, the vehicle has to be parked with only one wheel braked (namely, pulling one of the left and right brakes).

### Summary of the Invention

### Object of the Invention

An object of the invention is to provide a brake operation system including left and right individual brake pedals, with novel features to improve responsibility and reliability of the braking action, to fore-and-aft minimize the brake operation system, and to prevent the pulling of one brake.

### Means to Achieve the Object

According to the invention, a brake operation system for a vehicle, comprises: left and right independent brake pedals; and a master brake pedal for simultaneously operating the left and right brake pedals.

In the brake operation system for a vehicle according to the invention, the master brake pedal is disposed at the middle between the left and right brake pedals. The master brake pedal is adapted to be trod so as to depressing the left and right brake pedals for braking.

In the brake operation system for a vehicle according to the invention, a mount plate is fixed on a vehicle frame. A lateral pivot shaft is disposed on a hidden side of the mount plate. A left brake boss fixed to the left brake pedal is rotatably supported on the pivot shaft. A right brake boss fixed to the right brake pedal is rotatably supported on the pivot shaft. A master brake boss fixed to the master brake pedal is rotatably supported on the pivot shaft. A connection member connects the left brake boss to a brake device for a left running wheel. Another connection member connects the right brake boss to another brake device for a right running wheel. In this way, the brake operation system is configured so as to brake on the left and right running wheels individually.

In the brake operation system for a vehicle according to the invention, the mount plate includes a horizontal floor surface, a slant wall surface and a front wall surface. The slant wall surface is extended upwardly forward from a front end portion of the floor surface. The front wall surface is extended upward from an upper end portion of the slant wall surface. The pivot shaft is disposed in front of the slant wall surface.

In the brake operation system for a vehicle according to the invention, the master brake pedal includes an equalizer plate and a pedal plate. The equalizer plate is rotatably supported on an arm extended from the master brake boss. The pedal plate is fixed on the fore-and-aft arm.

The brake operation system for a vehicle according to the invention further comprises a parking lock system. The parking lock system includes: a parking lever to be operated for parking the vehicle; a rotary arm onto which a base portion of the parking lever; an engaging member provided on the fore-and-aft arm of the master brake pedal; and an engageable portion provided on the rotary arm and faced to the engaging member so as to be engageable with the engaging member. In this way, the parking lock system is configured so that, while the master brake is depressed, the parking lever is operated to a parking position so as to engage the engaging member with the engageable portion, thereby holding the depressed master brake pedal.

In the brake operation system for a vehicle according to the invention, the parking lock system further includes a limit switch for detecting a rotational position of the rotary arm, so as to decide whether the master brake pedal is depressed or not. An engine is started only when the master brake pedal is recognized to be depressed.

### Effects of the Invention

Since the brake operation system for a vehicle comprises: left and right independent brake pedals; and a master brake pedal for simultaneously operating the left and right brake pedals, in an urgent case, an operator surely operates the master brake pedal to simultaneously operate the left and right brake pedals, that is, the operator is prevented from operating only one of the brake pedals, i.e., from pulling one brake.

The master brake pedal is disposed at the middle between the left and right brake pedals, and adapted to be trod so as to depressing the left and right brake pedals for braking. Therefore, the brake operation system is advantageously simple and reliable and saves manufacturing costs.

A mount plate is fixed on a vehicle frame. A lateral pivot shaft is disposed on a hidden side of the mount plate. A left brake boss fixed to the left brake pedal is rotatably supported on the pivot shaft. A right brake boss fixed to the right brake pedal is rotatably supported on the pivot shaft. A master brake boss fixed to the master brake pedal is rotatably supported on the pivot shaft. A connection member connects the left brake boss to a brake device for a left running wheel. Another connection member connects the right brake boss to another brake device for a right running wheel. In this way, the brake operation system is configured so as to individually brake on the left and right running wheels. Therefore, the number of parts is reduced because the brake bosses are rotatably supported on the single pivot shaft, in comparison with the conventional system including the two pivot shafts.

The mount plate includes a horizontal floor surface, a slant wall surface and a front wall surface. The slant wall surface is extended upwardly forward from a front end portion of the floor surface. The front wall surface is extended upward from an upper end portion of the slant wall surface. The pivot shaft is disposed in front of the slant wall surface. Therefore, a sufficient space for extending the lateral pivot shaft is ensured on the hidden side of the slant wall surface. Consequently, the pivot shaft is disposed rearward in comparison with a pivot shaft provided on a mount plate supposed to be substantially L-shaped when viewed in side. In this way, the brake operation system is fore-and-aft minimized.

The master brake pedal includes an equalizer plate and a pedal plate. The equalizer plate is rotatably supported on an arm extended from the master brake boss. The pedal plate is fixed on the fore-and-aft arm. Therefore, the left and right brake pedals are equally depressed so as to stably brake on the vehicle.

A parking lock system includes: a parking lever to be operated for parking the vehicle; a rotary arm onto which a base portion of the parking lever; an engaging member provided on the fore-and-aft arm of the master brake pedal; and an engageable portion provided on the rotary arm and faced to the engaging member so as to be engageable with the engaging member.
In this way, the parking lock system is configured so that, while the master brake is depressed, the parking lever is operated to a parking position so as to engage the engaging member with the engageable portion, thereby holding the depressed master brake pedal. Therefore, the parking operation for parking the vehicle can be easily performed, preventing the pulling of one brake.

The parking lock system further includes a limit switch for detecting a rotational position of the rotary arm, so as to decide whether the master brake pedal is depressed or not. An engine is started only when the master brake pedal is recognized to be depressed. Therefore, the master brake pedal is surely depressed before the engine is started, thereby ensuring safety.

### Brief Description of the Drawings

Fig. 1 is a plan view of a system between a mount plate and an HST.
Fig. 2 is a view of the system when viewing a hidden side of the mount plate.
Fig. 3 is a bottom view of the brake system.
Fig. 4 is a perspective view of the brake system.
Fig. 5 is a side view of the brake system.
Fig. 6 is a rear view partly in section of an equalizer plate.
Fig. 7 is a diagram for describing action of a limit switch.

### Description of Notations

- 3: Mount Plate
- 11: Left Brake Pedal
- 12: Right Brake Pedal
- 13: Master Brake Pedal
- 61: Pivot Shaft

### Best Mode for Carrying out the Invention

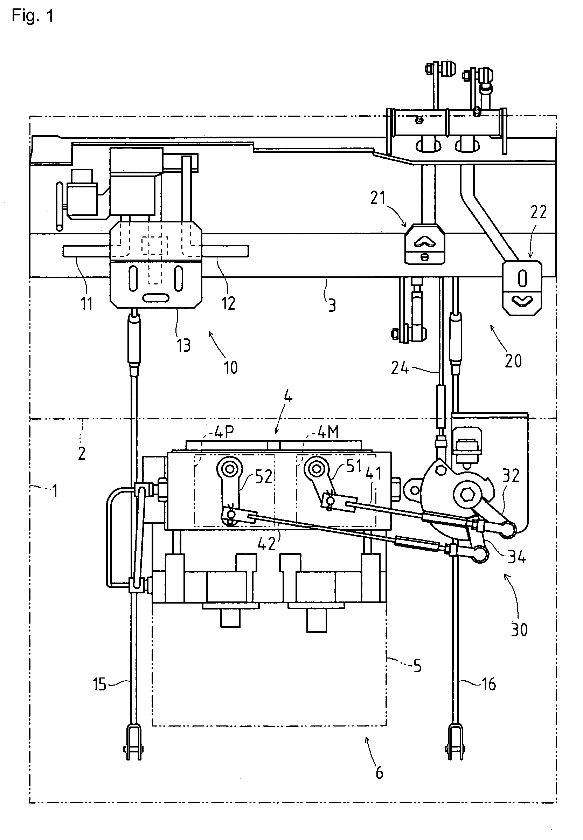

An embodiment of the invention will be described with reference to drawings. Hereinafter, the description is based on the assumption that "front" is referred to the direction to which the vehicle faces during forward traveling, and "right" is referred to as right of the vehicle when viewed forward. Referring to Fig. 1, "front" is directed to a top of the sheet of Fig. 1, and "right" is directed to a right side of the sheet of Fig. 1.
As shown in Fig. 1, a step 2 is spread over a vehicle frame 1 so as to serve as a footboard for an operator. A mount plate 3 for mounting various pedals is spread over vehicle frame 1 in front of step 2. An HST 4 is disposed downwardly rearward from step 2. A gearbox 5 incorporating a planetary gear unit is disposed behind HST 4. The planetary gear unit and HST 4 are combined so as to serve as an HMT (hydro-mechanical transmission) 6.

A brake operation system 10 is disposed on the left side of mount plate 3. Brake operation system 10 includes a left brake pedal 11, a right brake pedal 12, and a master brake pedal 13 for simultaneously operating left and right brake pedals 11 and 12. Brake pedals 11 and 12 are interlockingly connected to respective brake devices (not shown) through respective links 15 and 16.

A speed control operation system 20 is disposed on the right side of mount plate 3. Speed control operation system 20 includes a forward traveling pedal 21 and a backward traveling pedal 22.
Forward-traveling pedal 21 and backward-traveling pedal 22 are connected to a swash plate angle control mechanism 30 through a link 24. Swash plate angle control mechanism 30 is connected to a control arm 52 of a hydraulic pump 4P through a pump control link 42, and is connected to a control arm 51 of a hydraulic motor 4M through a motor control link 41.

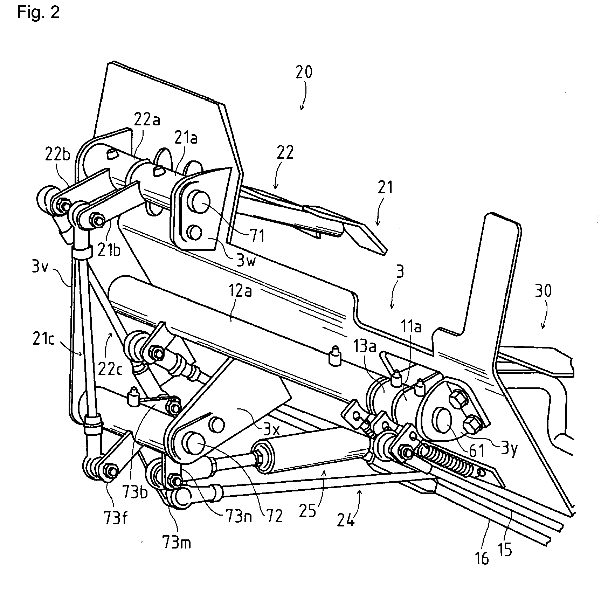

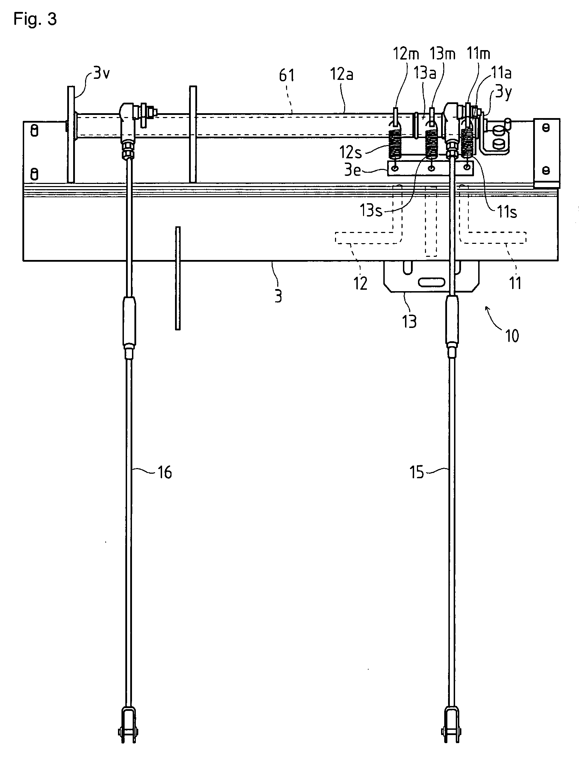

Brake control system 10 will now be described. As shown in Figs. 2 and 3, a lateral pivot shaft 61 is disposed on a hidden side of mount plate 3 of vehicle frame 1. Pivot shaft 61 has a length which is substantially as large as the lateral width of mount plate 3. A stay 3v projects at a left portion of the hidden side of mount plate 3, and a stay 3y projects at a right portion of the hidden side of mount plate 3. Pivot shaft 61 is spanned between stays 3v and 3y.
A left brake boss 11 a, a right brake boss 12a and a master brake boss 13a are rotatably supported on pivot shaft 61. Left brake pedal 11 is fixed to left brake boss 11a, right brake pedal 12 is fixed to right brake boss 12a, and master brake pedal 13 is fixed to master brake boss 13a.
Left brake pedal 11a is connected at its right end portion to link 15, serving as a connection member connected to the brake device for the right running wheel. Right brake pedal 11a is connected to link 16, serving as a connection member connected to the brake device for the left running wheel. In this way, links 15 and 16 are individually operated in response to individual operation of the respective left and right brake pedals 11 and 12, so as to individually brake on the respective left and right running wheels. The connection members may be wires or others, instead of rod-shaped links 15 and 16.
In the above configuration, brake bosses 11a, 12a and 13a are pivoted on the single pivot shaft 61, thereby reducing the number of parts in comparison with the conventional system including the juxtaposed two pivot shafts. The operation system between the brake pedals and the brake devices, requiring no linkage, is improved in rigidity so as to improve the responsibility and reliability of the brake action.

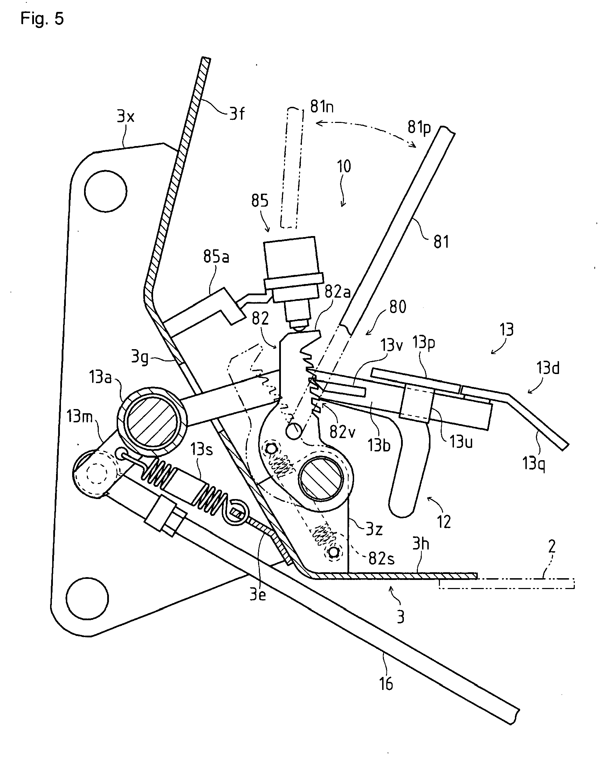

As shown in Figs. 2 and 5, arms 11 m, 12m and 13m are extended downwardly forward from left brake boss 11 a, right brake boss 12a and master brake boss 13, respectively. Arms 11m, 12m and 13m are connected to a hook engaging plate 3e on mount plate 3 through respective returning springs 11 s, 12s and 13s. Returning springs 11 s, 12s and 13a bias respective bosses 11 a, 12a and 13a counterclockwise in Fig. 5, so as to pull up respective brake pedals 11, 12 and 13 for unbraking unless they are trod.

As shown in Fig. 5, mount plate 3 includes a horizontal floor surface 3h, a slant wall surface 3g and a front wall surface 3f. Slant wall surface 3g is extended upwardly forward from a front end portion of floor surface 3h. Front wall surface 3f is extended upward from an upper end portion of slant wall surface 3g. Pivot shaft 61 is disposed in front of slant wall surface 3g.
Due to the shape of mount plate 3, a space on the hidden side of slant wall surface 3g is ensured for laterally spanning pivot shaft 61. In this space, pivot shaft 61 can be disposed rearward in comparison with that disposed on a mount plate 3 supposed to be substantially L-shaped when viewed in side, for instance. Consequently, brake operation system 10 is fore-and-aft minimized.

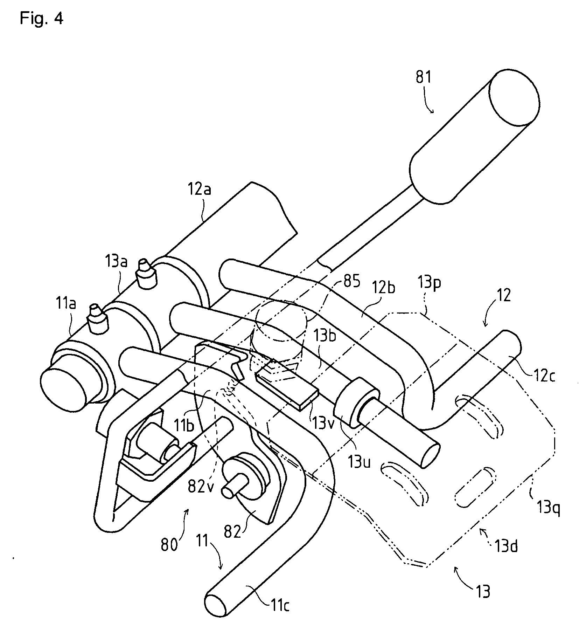

As shown in Fig. 4, left brake pedal 11 includes a fore-and-aft arm 11 b and a pedal arm 11c. Fore-and-aft arm 11 b is extended upwardly rearward from left brake boss 11a. Pedal arm 11 c to be trod is extended downward from fore-and-aft arm 11 b, and bent leftward.

As shown in Fig. 4, right brake pedal 12 includes a fore-and-aft arm 12b and a pedal arm 12c. Fore-and-aft arm 12b is extended upwardly rearward from right brake boss 12a. Pedal arm 12c to be trod is extended downward from fore-and-aft arm 12b, and bent leftward.

As shown in Fig. 4, master brake pedal 13 includes a fore-and-aft arm 13b and a pedal plate 13d. Fore-and-aft arm 13b is extended upwardly rearward from master brake boss 13a. Pedal plate 13d is fitted on fore-and-aft arm 13b, and disposed above fore-and-aft arm 11 b of left brake pedal 11 and fore-and-aft arm 12b of right bake pedal 12b. Due to this arrangement, master brake pedal 13 is disposed at the middle between left and right brake pedals 11 and 12.

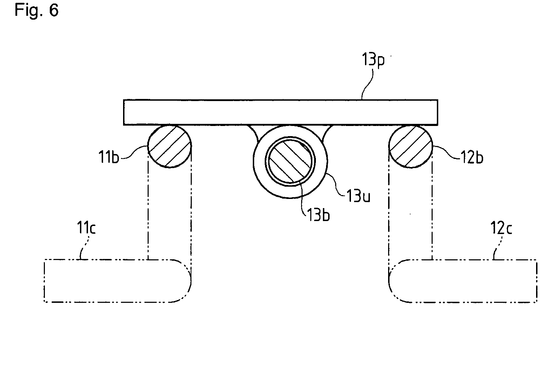

As shown in Figs. 4 to 6, pedal plate 13d of master brake pedal 13 includes an equalizer plate 13p and a pedal plate 13q. Equalizer plate 13p is rotatably supported at its boss 13u on fore-and-aft arm 13b extended rearward from master brake boss 13d. Pedal plate 13q to be trod is fixed on fore-and-aft arm 13b behind equalizer plate 13p. Equalizer plate 13p and pedal plate 13q are disposed so that, when pedal plate 13d is depressed, equalizer plate 13p contacts fore-and-aft arm 11 b extended rearward from left brake boss 11 a and fore-and-aft arm 12b extended rearward from right brake boss 12a, however, pedal plate 13q is prevented from contacting fore-and-aft arms 11 b and 12b. Namely, when depressed master brake pedal 13 is viewed in plan, equalizer plate 13p overlap parts of fore-and-aft arms 11 b and 12b at its opposite sides.
Due to the configuration of master brake pedal 13, when pedal plate 13q is trod, equalizer plate 13p is depressed so as to depress fore-and-aft arms 11 b and 12b, thereby simultaneously depressing left and right brake pedals 11 and 12.
In this embodiment, equalizer plate 13p is disposed adjacent to pedal plate 13q. Alternatively, equalizer plate 13p may be disposed opposite to the extension direction of fore-and-aft arm 13b, i.e., it may be disposed on the hidden side of mount plate 3. In this case, equalizer plate 13p may be disposed below arms extended from respective bosses 11 a, 12a and 13a opposite to fore-and-aft arms 11 b, 12b and 13b.

Due to the configuration of brake operation system 10, even if an operator is confused in an urgent case, both left and right brake pedals 11 and 12 are simultaneously depressed only by treading master pedal 13, so as to prevent the depression of only one of brake pedals 11 and 12.
Consequently, the pulling of one brake is surely prevented in an urgent case. With respect to operation of master brake pedal 13, equalize plate 13b is pivotal centered on fore-and-aft arm 13b so as to equally depress fore-and-aft arms 11 b and 12b. Therefore, the left and right brakes are equally applied so as to stably brake the vehicle. In this way, brake operation system 10 is advantageously simple, reliable (for surely applying the brakes) and inexpensive.

A parking lock system 80 will be described.
Due to brake operation system 10 of the present invention, left and right brake pedals 11 and 12 can be simultaneously depressed by master brake pedal 13. It means that, while the vehicle is parked, the left and right brakes can be kept to be applied if depressed master brake pedal 13 is locked.
Therefore, the vehicle is provided with parking lock system 80 including a parking lever 81 and a rotary arm 82. Parking lever 81 is operated for parking the vehicle. Parking lever 81 is fixed at its base portion on rotary arm 82. An engaging member 13v is provided on fore-and-aft arm 13b of master brake pedal 13, and rotary arm 82 is provided with an engageable portion 82v facing engaging member 13v so as to be engageable with engaging member 13v. While master brake pedal 13 is depressed, parking lever 81 is operated to a parking position 81 p so as to engage engageable portion 81v with engaging member 13v, thereby holding depressed master brake pedal 13.

As shown in Fig. 5, rotary arm 82 is rotatably supported on a stay 3z provided on mount plate 3, and is pulled by a returning spring 82s retained by a stay 3s so as to be biased counterclockwise in the drawing.
Parking lever 81 is connected at its base portion to rotary arm 82, so that rotary arm 82 is rotated according to the operation of parking lever 81. When the vehicle is parked, parking lever 81 is rotated clockwise in the drawing, so as to rotate rotary arm 82 clockwise against the force of returning spring 82s. Unless parking lever 81 is operated, i.e., unless the vehicle is parked, parking lever 81 is set at a parking releasing position 81 n due to the force of spring 81.
Plate-shaped engaging member 13v is extended fore-and-aft on a side of fore-and-aft arm 13b of master brake pedal 13 so as to face engageable portion 82v formed on a rear side surface of rotary arm 82. Engageable portion 82v is saw-toothed. Engaging member 13v is inserted into one of recesses among the teeth of engageable portion 82v so as to engage with engageable portion 82v. In this case, returning spring 13s of master brake pedal 13 biases fore-and-aft arm 13b clockwise so as to bias engaging member 13v upward. Rotary arm 82 is pulled upward by the upward force of engaging member 13v, so as to be restricted in rotation, thereby holding depressed master brake pedal 13.
Due to the above configuration, the parking operation can be easily performed preventing the pulling of one of the brakes.

As shown in Fig. 5, a limit switch 85 is provided for detecting a rotational position of rotary arm 82, so as to decide whether or not master brake pedal 13 is depressed. The engine is adapted to start only when master brake pedal 13 is recognized to be depressed.
Due to this configuration, master brake pedal 13 is necessarily depressed at the start of the engine, so as to ensure safety.
In this embodiment, an operator can recognize whether or not the engine is ready to start, based on detection of the operational condition of parking lever 81 in addition to the detection of the operational condition of master brake pedal 13. This configuration will be detailed as follows.

As shown in Fig. 5, limit switch 85 is mounted onto a stay 85a projecting from mount plate 3. Limit switch 85 is provided at its lower portion with a detection portion, facing an upper contact surface 82a of rotary arm 82 and engaging member 13v, so as to detect the rotational position of master brake pedal 13 and the rotational condition of rotary arm 82.
Limit switch 85 is connected to a controller for controlling the start of the engine, so that the controller recognizes the detection condition of limit switch 85.

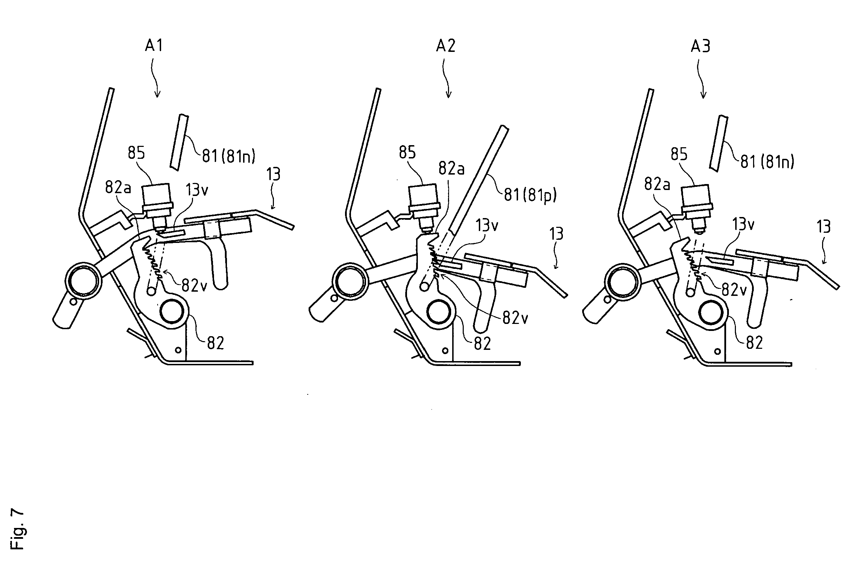

In the above configuration, unless master brake pedal 13 is depressed, engaging member 13v touches limit switch 85 (as a condition A1 in Fig. 7).
When parking lever 81 is disposed at parking position 81 p, upper contact surface 82a of rotary arm 82 touches limit switch 85 (as a condition A2 in Fig. 7).
When master brake pedal 13 is depressed and parking lever 81 is disposed at parking releasing position 81 n, neither engaging member 13v nor rotary arm 82 touches limit switch 85 (as a condition A3 in Fig. 7).
In this way, the only one limit switch 85 is used for detecting which of conditions A1, A2 and A3 shown in Fig. 7 is realized.

In the above configuration, the controller starts the engine only when limit switch 85 set in condition A3 of Fig. 7 is detected, because this safe condition for starting the engine is realized by completing the operator's optional brake operation (operating master brake pedal 13 and parking lever 81).
An engine-starting key may be disposed apart from master brake pedal 13 so as to be operable by only an operator sitting on the seat. In this arrangement, when the engine-starting key is operated in condition A3 of Fig. 7, it is recognized that an operator sitting on the seat operates the engine-starting key. Due to this arrangement of the engine-starting key, the engine can be started more safely.

Each of conditions A1 and A2 of Fig. 7 is regarded as the state before the operator's preparation for engine starting is completed. Therefore, in this condition, the engine is safely prevented from starting.

In this way, the engine can be started in a safe condition.
Further, in the above configuration, due to the detection of the position of master brake pedal 13, the only one limit switch 85 is required economically in comparison with a case where two limit switches are used for detecting left and right brake pedals 11 and 12.

### Industrial Applicability

The brake operation system for a vehicle according to the invention surely prevents the pulling of one brake in an urgent case, thereby enhancing durability of various vehicles.

## Claims

1. A brake operation system for a vehicle, comprising:
left and right independent brake pedals; and
a master brake pedal for simultaneously operating the left and right brake pedals.

2. The brake operation system for a vehicle according to claim 1, wherein the master brake pedal is disposed at the middle between the left and right brake pedals, and wherein the master brake pedal is adapted to be trod so as to depressing the left and right brake pedals for braking.

3. The brake operation system for a vehicle according to claim 1 or 2, further comprising:
a mount plate fixed on a vehicle frame;
a lateral pivot shaft disposed on a hidden side of the mount plate;
a left brake boss fixed to the left brake pedal and rotatably supported on the pivot shaft;
a right brake boss fixed to the right brake pedal and rotatably supported on the pivot shaft;
a master brake boss fixed to the master brake pedal and rotatably supported on the pivot shaft;
a connection member connecting the left brake boss to a brake device for a left running wheel; and
another connection member connecting the right brake boss to another brake device for a right running wheel, so that the brake operation system is configured so as to individually brake the left and right running wheels.

4. The brake operation system for a vehicle according to any of claims 1 to 3, the mount plate including:
a horizontal floor surface;
a slant wall surface extended upwardly forward from a front end portion of the floor surface; and
a front wall surface extended upward from an upper end portion of the slant wall surface, wherein the pivot shaft is disposed in front of the slant wall surface.

5. The brake operation system for a vehicle according to any of claims 1 to 4, the master brake pedal including:
an equalizer plate rotatably supported on an arm extended from the master brake boss; and
a pedal plate fixed on the fore-and-aft arm.

6. The brake operation system for a vehicle according to any of claims 1 to 5, further comprising a parking lock system, the parking lock system including:
a parking lever to be operated for parking the vehicle;
a rotary arm onto which a base portion of the parking lever;
an engaging member provided on a fore-and-aft arm of the master brake pedal; and
an engageable portion provided on the rotary arm and faced to the engaging member so as to be engageable with the engaging member, wherein, while the master brake is depressed, the parking lever is operated to a parking position so as to engage the engaging member with the engageable portion, thereby holding the depressed master brake pedal.

7. The brake operation system for a vehicle according to claim 6, the parking lock system further including:
a limit switch for detecting a rotational position of the rotary arm so as to decide whether the master brake pedal is depressed or not, and wherein an engine is started only when the master brake pedal is recognized to be depressed.
